# FASCICULE DE BREVET EUROPEEN

(11) **EP 3 032 799 B1**
(45) Date de publication et mention de la délivrance du brevet: **29.08.2018**
(21) Numéro de dépôt: 15198303.8
(22) Date de dépôt: 07.12.2015
(51) Int. Cl.: H04L 29/06

(54) **PROCÉDÉ D'AUTHENTIFICATION D'UN UTILISATEUR, SERVEUR, TERMINAL DE COMMUNICATION ET PROGRAMMES CORRESPONDANTS**
AUTHENTIFIZIERUNGSVERFAHREN EINES BENUTZERS, ENTSPRECHENDER SERVER, ENTSPRECHENDES KOMMUNIKATIONSENDGERÄT UND ENTSPRECHENDE PROGRAMME
METHOD FOR AUTHENTICATING A USER, CORRESPONDING SERVER, COMMUNICATION TERMINAL AND PROGRAMS

(30) Priorité: 12.12.2014 FR 1462382
(43) Date de publication de la demande: 15.06.2016
(73) Titulaire: Ingenico Group, 75015 Paris (FR)
(72) Inventeur: NACCACHE, David, 75018 PARIS (FR)
(74) Mandataire: Vidon Brevets & Stratégie

(56) Documents cités:
- US-A1- 2010 058 064
- US-A1- 2014 096 220

## Description

### 1. Domaine de l'invention

L'invention se rapporte au domaine de l'authentification d'utilisateurs. Plus particulièrement, l'invention se rapporte au domaine de l'authentification d'utilisateur auprès de services tels que des services d'accès à des informations confidentielles ou encore à des services de paiement.

### 2. Art Antérieur

L'authentification d'utilisateurs auprès de services et plus particulièrement de services en ligne est problématique. En règle générale, réaliser une authentification d'un utilisateur nécessite d'une part une saisie d'un identifiant (de type login) qui permet de communiquer l'identité de l'utilisateur et une saisie d'un mot de passe (ou d'un code d'identification personnel) qui permet de s'assurer que la personne est réellement celle qu'elle prétend être. En réalité, de tels systèmes ne s'assurent que d'une seule chose : que la personne qui s'identifie avec un identifiant (qui n'est pas nécessairement le sien) possède également le mot de passa qui correspond à cet identifiant. À aucun moment, avec ces systèmes, on ne s'assure que l'utilisateur est réellement celui qu'il prétend être.

Par ailleurs, outre un identifiant, l'utilisateur doit souvent retenir un mot de passe, ce qui pose problème. En effet, pour éviter d'avoir des mots de passe trop nombreux, beaucoup d'utilisateurs utilisent le même mot de passe pour tous les services (services de courriers électroniques, services de stockage de fichiers sur un espace de stockage commun, accès aux comptes bancaires, etc.). D'autres utilisateurs, encore moins prudents, utilisent des mots de passe simplissimes, de type "azerty" ou "password". Dans ce deuxième cas de figure, il est évident qu'un tel mot de passe ne sert pratiquement à rien.

Paradoxalement, les utilisateurs sont demandeurs de dispositifs d'authentification performants car ils ne souhaitent pas que leurs messageries électroniques ou leurs comptes bancaires soient piratés. Cependant, étant soit réfractaire ou soit peu au fait des problématiques d'usurpation d'identité ou des problématiques de piratage, l'utilisateur est en règle général le maillon faible d'un système d'authentification.

De nombreuses techniques ont été proposées pour pallier les problèmes d'authentification et les problèmes de convivialité de l'authentification. Parmi ceux-ci, on peut notamment citer l'utilisation de cartes à puces, dans certains cas de figure, ou encore l'utilisation de jetons (dispositifs physiques permettant une génération de mots de passe aléatoires). Cependant, bien que performants du point de vue de la force de l'authentification, ces systèmes ne demeurent pas moins relativement peu conviviaux : pour l'utilisateur il est toujours nécessaire de saisir un identifiant et/ou un mot de passe, la plupart du temps, il est nécessaire de saisir ces deux infirmations.

Des systèmes permettent de ne saisir qu'un mot de passe existent : la saisie de l'identifiant est réalisée par d'autres biais. Le système le plus connu pour ce faire est le cookie, ce petit fichier textuel enregistré par un navigateur Web lorsqu'un serveur Web le demande : dans ce système, l'utilisateur ne saisit qu'une seule fois son identifiant (lors de la première connexion au service). Par la suite, lors des connexions suivantes au service, seul le mot de passe doit être saisit. D'autres systèmes existent (permettant de ne saisir qu'un mot de passe : il s'agit par exemple de systèmes basés sur l'utilisation de carte à puce ou de terminaux de communication (comprenant des données d'identification) qui permettent de se passer de saisir un identifiant. De tels systèmes, cependant, nécessitent quand même de saisir un mot de passe. Ceci est d'ailleurs préférable car il est peu rassurant de permettre à un dispositif, aussi sécurisé soit-il, d'authentifier complètement un utilisateur. Le document US2010/058064, 4 mars 2010 (2010-03-04), décrit un procédé permettant à un utilisateur souhaitant accéder à un service distant à partir d'un terminal de communication non sûr de réaliser la procédure d'authentification requise par ce service distant à partir d'un terminal de confiance en sa possession. Il n'empêche que la problématique générale d'authentification pose un problème de convivialité non négligeable, qui nuit à la sécurité du système.

### 3. Résumé de l'invention

La technique proposée ne pose pas ces problèmes de l'art antérieur. Plus particulièrement, la divulgation porte sur un procédé d'authentification d'un terminal de communication appartenant à un utilisateur après d'un serveur d'authentification connecté à un terminal passerelle par l'intermédiaire d'un réseau de communication. Un tel procédé comprend, au sein du serveur d'authentification :
- une étape d'obtention, à partir dudit terminal passerelle, d'une donnée représentative d'une identité de l'utilisateur ;
- une étape de configuration, par ledit serveur d'authentification d'une liaison de transmission de données entre ledit serveur d'authentification et ledit terminal de communication utilisateur, par l'intermédiaire d'une interface de transmission de donnée prédéterminée dudit terminal passerelle et en fonction de ladite donnée représentative d'une identité de l'utilisateur ;
- une étape de transmission, par le serveur d'authentification, au terminal de communication utilisateur, d'une donnée chiffrée de vérification d'authentification, par l'intermédiaire de la liaison de transmission de données ;
- une étape de réception, par le serveur d'authentification, en provenance du terminal de communication utilisateur, d'une donnée chiffrée de contre-vérification d'authentification ;
- une étape de délivrance d'une assertion d'authentification de l'utilisateur lorsque la donnée de contre-vérification d'authentification correspond à ladite donnée de vérification.

Selon une caractéristique particulière, l'interface de transmission de donnée prédéterminée dudit terminal passerelle est une interface bluetooth et en ce que la liaison de transmission de données entre le serveur d'authentification et le terminal de communication utilisateur est une liaison bluetooth virtuelle.

Selon une caractéristique particulière, préalablement à l'étape d'obtention d'une donnée représentative d'une identité de l'utilisateur, ladite méthode comprend :
- une étape de réception, en provenance dudit terminal passerelle ou d'un serveur connecté audit serveur d'authentification, d'une requête de connexion ; et
- une étape de transmission, audit terminal passerelle, d'une requête d'identification en fonction de ladite requête de connexion.

Selon une caractéristique particulière, l'étape de configuration, par ledit serveur d'authentification d'une liaison de transmission de données entre ledit serveur d'authentification et ledit terminal de communication utilisateur comprend :
- une étape d'obtention, d'au moins une donnée représentative d'au moins un paramètre de connexion au terminal de communication à l'aide de ladite donnée représentative de ladite identité de l'utilisateur ;
- une étape de transmission de ladite au moins une donnée représentative d'un paramètre de connexion audit terminal passerelle ;

Selon une caractéristique particulière, ledit au moins un paramètre de connexion comprend au moins une donnée nécessaire à la construction du lien entre le terminal de communication de l'utilisateur et le terminal passerelle.

Selon une caractéristique particulière, ledit au moins un paramètre de connexion comprend au moins une donnée appartenant au groupe comprenant :
- une adresse physique du terminal de communication de l'utilisateur ;
- une donnée de type code d'appairage ;
- une donnée de type mot de passe.

Dans un autre mode de réalisation, la technique se rapporte également à un serveur d'authentification d'un terminal de communication appartenant à un utilisateur après d'un serveur d'authentification connecté à un terminal passerelle par l'intermédiaire d'un réseau de communication. Un tel serveur comprend :
- un module configuré pour obtenir, à partir dudit terminal passerelle, d'une donnée représentative d'une identité de l'utilisateur ;
- un module configuré pour configurer d'une liaison de transmission de données entre ledit serveur d'authentification et ledit terminal de communication utilisateur, par l'intermédiaire d'une interface de transmission de donnée prédéterminée dudit terminal passerelle et en fonction de ladite donnée représentative d'une identité de l'utilisateur ;
- un module configuré pour transmettre au terminal de communication utilisateur, d'une donnée chiffrée de vérification d'authentification, par l'intermédiaire de la liaison de transmission de données ;
- un module configuré pour recevoir en provenance du terminal de communication utilisateur, d'une donnée chiffrée de contre-vérification d'authentification ;
- un module configuré pour délivrer une assertion d'authentification de l'utilisateur lorsque la donnée de contre-vérification d'authentification correspond à ladite donnée de vérification.

Selon un autre aspect, la technique telle que proposée se rapporte également à un terminal intermédiaire et a un terminal de communication d'utilisateur. Chacun de ces deux terminaux comprend des moyens de mise en oeuvre des étapes du procédé qui le concerne et notamment des moyens de création d'une connexion sans fil afin de monter une liaison de sécurisée entre le terminal de communication et le serveur d'authentification. Les procédés mis en oeuvres, décrits par la suite, sont alors complémentaires du procédé d'authentification au niveau du serveur d'authentification.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, d'un point de vue général, faisant intervenir les terminaux et le serveur d'authentification ;
- la figure 2 décrit un serveur d'authentification selon la technique proposée ;
- la figure 3 décrit un terminal de communication d'utilisateur apte à mettre en oeuvre la technique proposée.
- la figure 4 décrit un terminal passerelle apte à mettre en oeuvre la technique proposée.

### 5. Description

### 5.1. Rappel du principe général

Comme exposé préalablement, le principe général de la technique proposé réside dans l'utilisation d'un terminal de communication, propre à l'utilisateur, pour effectuer une opération d'authentification à partir d'un autre terminal. Plus particulièrement, le principe consiste à initier un appairage entre un terminal de communication de l'utilisateur (par exemple un téléphone) et un serveur d'authentification *via* un autre terminal de communication de l'utilisateur (par exemple un ordinateur). Selon la technique proposée, cet appairage est réalisé en utilisant des moyens de communication propres à un premier terminal de communication (par exemple un ordinateur personnel ou une tablette un console de jeu, etc.), appelé terminal de communication passerelle, à partir duquel l'authentification est initiée. En d'autres termes, une partie de la procédure d'authentification (celle qui consiste par exemple à saisir le mot de passe pour l'accès à un service) est mise en oeuvre par un deuxième terminal de communication de l'utilisateur en utilisant des moyens de communication tiers, qui sont eux disponibles auprès d'un premier terminal de communication, dit terminal passerelle. Le terminal passerelle, tel qu'envisagé dans la présente, n'est pas un routeur, un point d'accès ou une box d'opérateur : ces équipements ne permettent pas à l'utilisateur de se connecter à un service (par exemple à un site web de commerce en ligne, un site à accès restreint) et de saisir des données de connexion de type identifiant/mot de passe. Le terminal passerelle est le terminal à partir duquel la procédure d'authentification est lancée. Le terminal passerelle est l'initiateur de la procédure d'authentification.

Plus particulièrement encore, dans au moins un mode de réalisation de la technique proposée, une interface de communication sans fil (*bluetooth,* wifi) est mise en oeuvre par le deuxième terminal de communication de l'utilisateur pour se connecter avec le serveur d'authentification en utilisant le terminal de communication passerelle. Il s'agit en quelque sorte d'un parasitage d'interface. En outre, combiné à cette utilisation d'une interface du terminal de communication passerelle, la technique proposée comprend en outre l'établissement d'une liaison spécifique de transmission de donnée entre le serveur d'authentification et le deuxième terminal de communication.

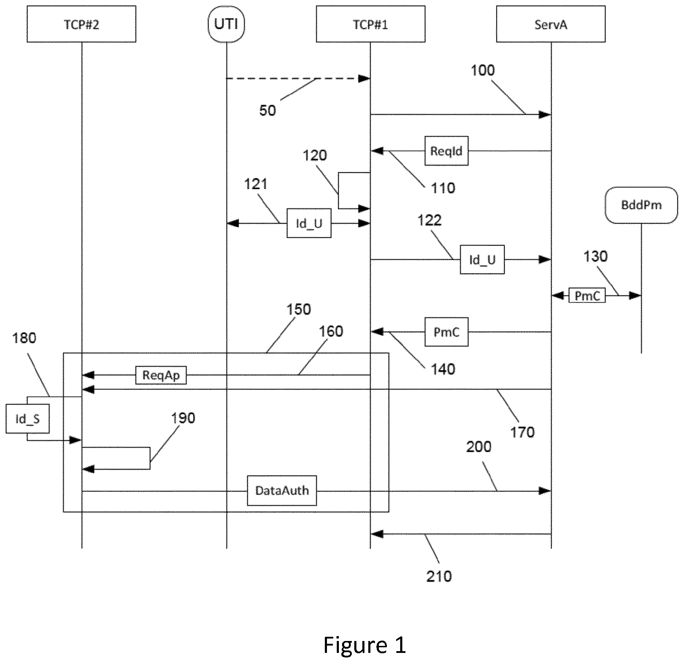

La technique proposée est décrite en relation avec la figure 1.

Un utilisateur (UTI) souhaite se connecter à un service en ligne, tel qu'un service bancaire. Pour ce faire, à partir d'un ordinateur ou d'une tablette (TCP#1), dit terminal passerelle, il ouvre (50) une application (par exemple un navigateur) (cette étape est optionnelle) et requiert (100) une connexion pour authentification auprès d'un serveur d'authentification (ServA) (ou bien auprès du serveur du fournisseur de services auquel l'utilisateur est connecté par l'intermédiaire du terminal passerelle [le serveur du fournisseur de services relaie alors cette requête au serveur d'authentification]). La requête de connexion, transmise par le terminal passerelle ou par un serveur auquel le terminal passerelle est connecté permet au serveur d'authentification (ServA) d'initier la transaction et de déterminer à quel dispositif il doit répondre.

Le serveur d'authentification (ServA) transmet (110) au terminal passerelle (TCP#1), une requête d'identification (ReqId). Le contenu de cette requête d'identification est explicité par la suite. La requête d'identification est optionnelle. Elle sert par exemple a rediriger le terminal passerelle vers une connexion sécurisée.

Le terminal passerelle (TCP#1) utilise (120) le contenu de cette requête d'identification (Reqld), pour requérir (121) auprès de l'utilisateur une saisie d'un identifiant (Id_U) (tel qu'une adresse de courrier électronique). Lorsque la saisie est réalisée et validée par l'utilisateur, cet identifiant (Id_U) est alors transmis (122), par le terminal passerelle (TCP#1) au serveur d'authentification (ServA).

A réception de cet identifiant (Id_U), le serveur d'authentification (ServA) recherche (130), au sein d'une base de données (BddPm), au moins une donnée représentative d'un paramètre de connexion (PmC) à un terminal de communication (TCP#2). Cette donnée représentative d'un paramètre de connexion (PmC) est obtenue grâce à la fourniture de l'identifiant (Id_U) de l'utilisateur. Cette donnée est ensuite transmise (140) au terminal passerelle (TCP#1) éventuellement accompagnée d'une instruction de construction d'une connexion virtuelle entre le serveur (ServA) et le terminal de communication (TCP#2).

Le terminal passerelle (TCP#1) reçoit ce paramètre de connexion (PmC) et grâce à celui-ci instancie (150) une liaison de transmission/réception de donnée avec le terminal de communication de l'utilisateur (TCP#2). Par exemple, lorsqu'une interface *bluetooth* est utilisée, le terminal de communication de l'utilisateur (TCP#2) reçoit (160) de la part du terminal passerelle (TCP#1), une requête d'appairage (ReqAp) audit terminal passerelle (TCP#1), ladite requête d'appairage (ReqAp) comprenant des données permettant un appairage avec le terminal de communication de l'utilisateur (TCP#2) par l'interface *bluetooth.* Le contenu de la requête d'appairage est explicité par la suite. Par exemple, lorsqu'une interface WiFi est utilisée, le terminal de communication de l'utilisateur (TCP#2) reçoit (160) de la part du terminal passerelle (TCP#1), une requête d'appairage (ReqAp) audit terminal passerelle (TCP#1), ladite requête d'appairage (ReqAp) comprenant des données permettant un appairage avec le terminal de communication de l'utilisateur (TCP#2) par l'interface WiFi. L'interface de transmission sans fil entre le terminal de communication de l'utilisateur (TCP#2) et le terminal passerelle (TCP#1) a relativement peu d'importance, bien que l'interface *bluetooth* soit une solution préférée car en termes de mise en oeuvre, l'interface *bluetooth* permet d'appairer plus aisément un terminal de type smartphone avec un terminal passerelle de type PC ou tablette : il n'est pas nécessaire de monter un réseau ad-hoc avec l'interface *bluetooth.*

Postérieurement à la réception (160) de la requête d'appairage (ReqAp), et à l'établissement de l'appairage avec le terminal passerelle (TCP#1), le terminal de communication de l'utilisateur (TCP#2), recherche (180), au sein d'une base de données interne et/ou d'un espace de stockage sécurisé du terminal, une donnée d'identification (Id_S) du serveur d'authentification (ServA). Il compare (190) cette donnée d'identification (enregistrée au sein du terminal) avec une donnée d'identification reçue du serveur. La donnée d'identification reçue du serveur est soit présente au sein de la requête d'appairage (ReqAp), soit transmise (170) par le serveur après l'appairage. Ceci permet de s'assurer que le terminal de communication de l'utilisateur ne subit pas une tentative de piratage de la part d'un serveur tiers ou du terminal de communication passerelle frauduleux.

Lorsque le terminal de communication de l'utilisateur (TCP#2) a vérifié l'identité du serveur d'authentification (ServA), le terminal de communication de l'utilisateur (TCP#2) transmet (200) au serveur d'authentification (ServA) une donnée d'authentification (DataAuth).

Deux possibilités sont offertes :
- soit le terminal de communication de l'utilisateur (TCP#2) transmet cette donnée par l'intermédiaire d'une connexion de données complémentaire à disposition du terminal de communication (par exemple une connexion 3G ou 4G) en contactant directement le serveur d'authentification;
- soit le terminal de communication de l'utilisateur (TCP#2) transmet cette donnée par l'intermédiaire de la connexion réalisée avec le terminal passerelle (TCP#1). Dans ce deuxième cas de figure, au moins un message est transmis "over" le protocole utilisé pour la connexion (par exemple "over *Bluetooth*" ou "over WiFi") à destination du serveur d'authentification. De manière complémentaire, ce message est transmis chiffré en utilisant une clé privée du terminal de communication de l'utilisateur (TCP#2).

A réception de cette donnée d'identification (DataAuth), le serveur d'authentification (ServA) attribue (210) une assertion d'authentification à l'utilisateur (et donc au terminal passerelle (TCP#1)).

Ainsi, le procédé décrit permet de ne pas avoir à saisir de mot de passe pour pouvoir effectuer une authentification d'un utilisateur auprès d'un service. La seule donnée requise pour pouvoir réaliser l'authentification est un login. Bien entendu, comme tout procédé d'authentification, le procédé proposé nécessite un enregistrement préalable auprès du serveur d'authentification. Cet enregistrement préalable est détaillé par la suite.

La méthode décrite se base sur la transmission de plusieurs requêtes. Seules les requêtes spécifiques à la technique décrites ont été mentionnées.

La requête d'identification (ReqId) comprend par exemple une adresse (par exemple de type URL), à laquelle le terminal passerelle (TCP#1) doit se connecter avant de fournir une quelconque information. Les paramètres de connexion (PmC) comprennent par exemple les données nécessaires à la construction du lien physique entre le terminal de communication de l'utilisateur (TCP#2) et le terminal passerelle (TCP#1). Parmi ces données, on trouve notamment l'adresse physique (adresse MAC) du terminal de communication de l'utilisateur et éventuellement une donnée de type code d'appairage ou mot de passe wifi. Cette donnée est transmise au terminal de communication de l'utilisateur pour permettre une connexion directe entre le terminal de communication de l'utilisateur et le terminal passerelle. Dans le cas d'un code d'appairage *bluetooth,* il s'agit du code d'appairage du serveur d'authentification.

La requête d'appairage (ReqAp) comprend au moins une donnée d'identification du serveur d'authentification (ServA). Cette donnée d'identification (DIdServA) permet au terminal de communication de l'utilisateur (TCP#2) de s'assurer de l'identité du dispositif qui tente de lui transmettre une requête d'authentification. Selon un mode de réalisation particulier, cette donnée d'identification correspond à une adresse (par exemple une adresse MAC) du serveur d'authentification (ServA) chiffrée à l'aide d'une clé publique du terminal de communication de l'utilisateur (TCP#2). La manière dont cette information est mise à disposition du serveur d'authentification (ServA) est décrite par la suite. Selon un mode de réalisation particulier, cette donnée d'identification correspond à une adresse (par exemple une adresse MAC) du serveur d'authentification (ServA) chiffrée à l'aide d'une clé privée du serveur d'authentification (ServA). Accessoirement, d'autres données d'identification sont également incluses, afin d'accroître la sécurité.

En d'autres termes, plutôt que réaliser un appairage avec le terminal passerelle, l'invention permet de réaliser un appairage directement avec le serveur d'authentification en utilisant une liaison de données "transportée" par l'intermédiaire du terminal passerelle. Dans le cas du *bluetooth* par exemple, on appaire le terminal de communication de l'utilisateur via *Bluetooth* avec le serveur d'authentification (et non pas avec le terminal passerelle). On établit une liaison *Bluetooth* non pas entre le terminal de l'utilisateur et le terminal passerelle (à partir duquel l'utilisateur cherche à se connecter) mais bien entre le serveur d'authentification et le terminal de l'utilisateur, via le terminal passerelle. Ainsi, le serveur d'authentification peut relayer au terminal passerelle, par l'intermédiaire d'une liaison TCP/IP, des paquets *Bluetooth,* paquets qui sont émis (tels quels) par le terminal passerelle (qui n'est pas en mesure de comprendre leurs contenus) ce qui permet de créer une sorte de canal *bluetooth* virtuel très longue distance entre le terminal de l'utilisateur et le serveur d'authentification.

En réalité on a donc un appairage *bluetooth* dédoublé avec d'une part une liaison physique blueetooth qui est établie entre le terminal de communication de l'utilisateur et le terminal passerelle et une liaison fonctionnelle *bluetooth* qui est établie entre le terminal de communication de l'utilisateur et le serveur d'authentification.

Afin que le système soit fonctionnel, le terminal passerelle se contente de mettre en oeuvre une translation d'adressage *bluetooth* afin de router correctement les données qui transitent entre le terminal de communication de l'utilisateur et le serveur d'authentification. Ainsi, techniquement, le serveur d'authentification implémente une pile fonctionnelle correspondant au protocole utilisé (par exemple une pile fonctionnelle *bluetooth* ou une pile fonctionnelle wifi) tandis que le terminal passerelle implémente de manière naturelle au moins une pile matérielle correspondant au protocole utilisé (par exemple une pile matérielle *bluetooth* ou une pile fonctionnelle wifi). Naturellement, le terminal passerelle implémente aussi une pile fonctionnelle correspondant au protocole utilisé, laquelle est pilotée par un module dédié. Plus spécifiquement, dans le cas d'une mise en oeuvre via *bluetooth,* un réseau de type "scatternet" peut être monté avec le terminal passerelle jouant le rôle de "noeud esclave" tandis que le terminal de communication de l'utilisateur et le serveur d'authentification jouent tous les deux un rôle de "noeud maître".

Bien entendu, il est clair, à la lecture de cet exposé que la technique proposée comporte deux volets distincts : d'une part un procédé mis en oeuvre du côté du serveur d'authentification et d'autre part un procédé mis en oeuvre par le terminal client de l'utilisateur, ces deux procédés ayant en commun l'utilisation d'un terminal passerelle afin de monter une liaison de transmission de données sans fil à longue distance. Dans la mesure où seule une faible partie de la liaison est réellement sans fil, cette liaison sans fil peut être qualifiée de virtuelle.

### 5.2. Paramétrage d'une connexion virtuelle

Afin de monter une connexion entre le terminal de communication de l'utilisateur et le serveur d'authentification, il est intéressant que le terminal de communication de l'utilisateur et le serveur d'authentification disposent de matériels permettant une reconnaissance mutuelle sécurisée. Plus particulièrement, il est souhaitable que le terminal de communication de l'utilisateur dispose au moins d'une clé publique du serveur d'authentification et que le serveur d'authentification dispose au moins d'une clé publique du terminal de communication de l'utilisateur. La possession de ces deux matériels va permettre à ces deux entités d'échanger des données sous une forme sécurisée. En sus de ces deux éléments, il est également souhaitable que le terminal de communication dispose d'une donnée permettant d'identifier le serveur d'authentification et que le serveur d'authentification dispose d'une donnée permettant d'identifier le terminal de communication de l'utilisateur.

Pour ce faire, plusieurs méthodes pourraient être mises en oeuvre. Les inventeurs, cependant, ont eu l'idée d'utiliser une méthode de connexion directe du terminal de communication de l'utilisateur avec le serveur d'authentification. Cette connexion directe est mise en oeuvre soit à partir d'une application spécifique, que l'utilisateur a pris soin d'installer au préalable sur son terminal de communication, soit par l'intermédiaire d'un service web accessible depuis le terminal de communication de l'utilisateur. Quel que soit le moyen employé pour réaliser cette connexion, celle-ci comprend les étapes nécessaires à l'échanges des données précitées (ou de données permettant d'obtenir les données précitées), données qui sont notamment par la suite utilisées dans le cadre des requêtes d'identification et d'appairages.

Plus particulièrement, dans au moins un mode de réalisation les clés publiques qui sont mises à disposition du terminal de communication de l'utilisateur d'une part et du serveur d'authentification d'autre part sont utilisées pour dériver des clés de sessions à partir de la mise en oeuvre d'un ou plusieurs défis au cours d'une procédure d'échange mutuel de clés.

Cette procédure de création de clés de sessions est mise en oeuvre postérieurement ou concomitamment à l'établissement de la liaison entre le terminal de communication de l'utilisateur et le serveur d'authentification. Pour la mise en oeuvre de cette liaison, le terminal passerelle n'est utilisé que pour la transmission des données sur le canal physique (couche physique de transmission de données).

De manière complémentaire, lors de l'établissement de la liaison entre le terminal de communication de l'utilisateur et le serveur d'authentification, c'est à dire postérieurement à la transmission par le terminal passerelle de la donnée d'identification de l'utilisateur (identifiant, adresse de courrier électronique, etc.), le serveur d'authentification met en oeuvre une étape préparatoire au cours de laquelle il s'assure que le terminal passerelle est bien apte à prendre en charge la procédure d'authentification de la technique proposée. Pour ce faire, le serveur :
- vérifie que le terminal passerelle possède bien les interfaces physiques nécessaires à la mise en oeuvre de la liaison ;
- vérifie qu'il peut requérir, auprès du terminal passerelle, une mise en oeuvre de ces interfaces ;

Lorsque le terminal passerelle ne permet pas au serveur d'authentification de réaliser ces vérifications (pour des raisons de sécurité par exemple), le serveur d'authentification requiert auprès du terminal passerelle, l'installation d'une application, appelée par commodité application passerelle. Cette application passerelle peut, par exemple, se présenter sous la forme d'un module logiciel installé au sein du navigateur web utilisé sur le terminal passerelle. Cette application passerelle peut également se présenter sous la forme d'une application exécutable directement par le système d'exploitation du terminal passerelle (par exemple Windows™ ou IOS™ ou Android™). Lorsque cette application passerelle est installée, c'est cette application qui effectue les opérations de vérification susmentionnées pour le compte du serveur d'authentification.

De manière complémentaire, lorsque cette application est installée au sein du terminal passerelle, c'est cette application qui prend en charge la fonction de relai de transmission de données entre le terminal de communication de l'utilisateur et le serveur d'authentification. Pour ce faire, 'application qui est délivrée par le serveur d'authentification lui-même comprend des matériels cryptographiques suffisants pour assurer la confidentialité des données relayées.

### 5.3. Description d'un cas d'utilisation

On présente, dans ce cas d'utilisation, l'emploi de la technique proposée afin de réaliser une transaction financière sur un site de commerce électronique. Dans ce cas d'utilisation, le terminal de communication de l'utilisateur est un smartphone (au sein duquel une application spécifique est installée), le terminal passerelle est un ordinateur de type PC portable et le serveur d'authentification est un serveur bancaire (il peut s'agir d'un serveur bancaire physique ou logique destiné uniquement à la mise en oeuvre d'authentifications). Une quatrième entité intervient dans ce cas d'utilisation : il s'agit du serveur du site de commerce électronique qui est utilisé pour effectuer les achats par l'utilisateur.

Préalablement à la mise en oeuvre de la technique proposée, on suppose que l'utilisateur a sélectionné, sur le site web en question, au moins un article qu'il a placé dans un panier d'achat et qu'il souhaite effectuer une transaction de paiement pour réaliser le règlement de ses achats.

Lorsque l'utilisateur souhaite réaliser le paiement, la procédure suivante est mise en oeuvre, conformément aux étapes préalablement décrites:
- l'utilisateur saisit, à partir du terminal passerelle, dans un champ prévu à cet effet, à partir du site web marchand auquel il est connecté, l'identifiant nécessaire à son authentification sur le site en question;
- le site web transmet au serveur bancaire l'identifiant saisit par l'utilisateur et réalise une redirection (HTTP redirect par exemple) vers une page de paiement du serveur bancaire. À partir de cet instant, le terminal passerelle est connecté au serveur bancaire.
- le serveur bancaire, conjointement avec le terminal passerelle, monte une connexion *bluetooth* avec le smartphone de l'utilisateur, comme exposé préalablement. Lorsque le smartphone de l'utilisateur n'est pas présent (c'est à dire qu'il n'est pas dans un rayon de transmission/réception des données *bluetooth* par rapport au terminal passerelle, la procédure d'authentification ne peut pas se poursuivre et la transaction est annulée. Ceci permet de s'assurer que l'utilisateur est bien présent. C'est pour cette raison que le choix de la technologie *bluetooth* est préféré, de par sa portée de transmission relativement faible (quelques mètres). Si le smartphone est présent, alors une application spécifique à la technique décrite est mise en oeuvre sur le smartphone pour permettre à celui-ci de s'authentifier auprès du serveur bancaire. Cette application met en oeuvre les étapes de la méthode qui doivent être exécutées par le terminal de communication de l'utilisateur. Optionnellement, afin d'augmenter la sécurité, l'application requiert, de la part de l'utilisateur, une saisie d'un code personnel d'identification (qui peut être par exemple, mais non nécessairement, un code d'identification personnel identique à celui utilisé pour la carte bancaire de l'utilisateur). Lorsqu'une telle option est mise en oeuvre, la transaction est annulée si ce code d'identification personnel n'est pas saisi dans un temps prédéterminé après la requête de saisie transmise par l'application à l'utilisateur.
- lorsque l'authentification du smartphone de l'utilisateur est réalisée, le serveur bancaire considère que l'utilisateur est bien la personne qu'il prétend être et met en oeuvre la transaction financière.

Accessoirement, dans la mesure où le serveur d'authentification est assuré de l'authenticité de l'identité de l'utilisateur, celui-ci ne requiert pas la saisie d'informations sur la carte bancaire : il utilise la carte bancaire associé au compte de l'utilisateur par sa banque, lorsque cette information est disponible, bien entendu. Optionnellement, le site de commerce électronique transmet les informations relatives à la carte bancaire à utiliser directement au serveur bancaire, conjointement à la redirection vers le serveur bancaire. Ainsi, l'utilisateur n'est pas obligé de saisir les données de sa carte bancaire à chaque fois qu'il souhaite réaliser un paiement.

Ainsi, outre le fait qu'il n'est plus nécessaire de saisir un mot de passe pour l'accès à un service, il n'est en outre pas nécessaire de saisir des informations bancaires pour l'accès à ce service.

### 5.4. Autres caractéristiques et avantages

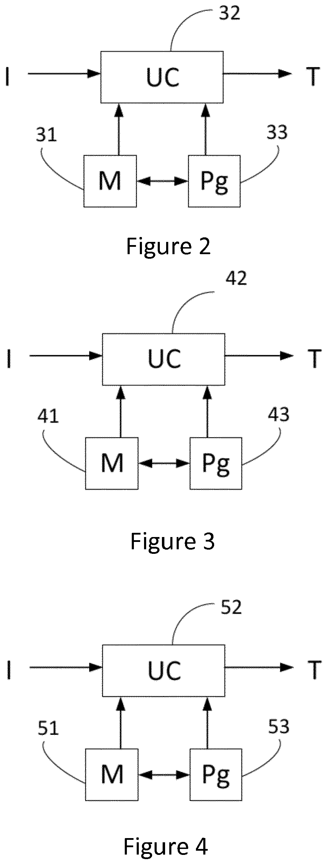

On décrit, en relation avec la figure 2, un serveur d'authentification mis en oeuvre pour authentifier un utilisateur à partir d'un terminal de communication (TCP#2) différent d'un terminal de communication initial, selon le procédé décrit préalablement.

Par exemple, le serveur d'authentification comprend une mémoire 31 constituée d'une mémoire tampon, une unité de traitement 32, équipée par exemple d'un microprocesseur, et pilotée par le programme d'ordinateur 33, mettant en oeuvre un procédé d'authentification d'un terminal de communication. À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une donnée représentative d'un identifiant d'un identifiant d'utilisateur, à partir du terminal passerelle. Le microprocesseur de l'unité de traitement 32 met en oeuvre les étapes du procédé d'authentification, selon les instructions du programme d'ordinateur 33 pour obtenir des données nécessaire à l'établissement d'une liaison virtuelle entre le terminal de l'utilisateur et le serveur d'authentification afin d'échanger, avec le terminal de communication de l'utilisateur, les données nécessaire à son authentification.

Pour cela, le serveur d'authentification comprend, outre la mémoire tampon 31, des moyens de communications, tels que des modules de communication réseau, des moyens de transmission de donnée et éventuellement un processeur de chiffrement.

Ces moyens peuvent se présenter sous la forme d'un processeur particulier implémenté au sein du dispositif, ledit processeur étant un processeur sécurisé. Selon un mode de réalisation particulier, ce dispositif met en oeuvre une application ou un module particulier qui est en charge de la réalisation des traitements, cette application ou ce module étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur et/ou du serveur d'authentification.

Par ailleurs, le serveur d'authentification comprend en outre les moyens de recherche, au sein d'une base de données, de données de connexion au terminal de l'utilisateur ainsi que des moyens d'obtention de clés de chiffrement, par exemple asymétriques (clés publiques/ clés privées) servant à générer des données de vérification et des données de contre-vérification durant l'authentification. Ces moyens se présentent également comme des interfaces de communications permettant d'échanger des données sur des réseaux de communication, des moyens d'interrogations et de mise à jour de base de données,...

On décrit, en relation avec la figure 3, un terminal de communication d'un utilisateur (TCP#2) mis en oeuvre pour authentifier un utilisateur, utilisateur qui s'est préalablement identifié par l'intermédiaire d'un terminal passerelle (TPC#1), selon le procédé décrit préalablement.

Par exemple, le terminal de communication d'un utilisateur comprend une mémoire 41 constituée d'une mémoire tampon, une unité de traitement 42, équipée par exemple d'un microprocesseur, et pilotée par le programme d'ordinateur 43, mettant en oeuvre un procédé d'authentification.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée au moins une donnée représentative d'une commande d'appairage avec le terminal passerelle (TCP#1). Le microprocesseur de l'unité de traitement 42 met en oeuvre les étapes du procédé d'authentification, selon les instructions du programme d'ordinateur 43 pour recevoir une requête d'appairage de la part du terminal passerelle (TCP#1), rechercher, au sein d'une base de données interne et/ou d'un espace de stockage sécurisé, une donnée d'identification du serveur d'authentification (ServA) ; comparer cette donnée d'identification avec une donnée d'identification reçue du serveur (par exemple au sein de la requête d'appairage); transmettre au serveur d'authentification (ServA) une donnée d'authentification (DataAuth).

Pour cela, le terminal de communication d'un utilisateur comprend, outre la mémoire tampon 41, des moyens de communications, tels que des modules de communication réseau, des moyens de transmission de donnée et éventuellement un processeur de chiffrement.

Ces moyens peuvent se présenter sous la forme d'un processeur particulier implémenté au sein du dispositif, ledit processeur étant un processeur sécurisé. Selon un mode de réalisation particulier, ce terminal de communication d'un utilisateur met en oeuvre une application ou un module particulièr qui est en charge de la réalisation des échanges, cette application ou ce module étant par exemple fourni par le fabricant du processeur en question (implémenté au sein du terminal) afin de permettre l'utilisation dudit processeur. Pour ce faire, le processeur comprend des moyens d'identification uniques. Ces moyens d'identification uniques permettent d'assurer l'authenticité du processeur et/ou du terminal de communication.

Par ailleurs, le terminal de communication d'un utilisateur comprend en outre les moyens de stockage d'une donnée de référence de l'identité du serveur et des moyens de stockages de clés de chiffrement. Ces moyens se présentent également comme des interfaces de communications permettant d'échanger des données sur des réseaux de communication, des moyens d'interrogations et de mise à jour de base de données, ...

On décrit, en relation avec la figure 4, un terminal de communication passerelle (TCP#1) mis en oeuvre pour authentifier un utilisateur à partir d'un terminal de communication (TPC#1), selon le procédé décrit préalablement.

Par exemple, le terminal de communication d'un utilisateur comprend une mémoire 51 constituée d'une mémoire tampon, une unité de traitement 52, équipée par exemple d'un microprocesseur, et pilotée par le programme d'ordinateur 53, mettant en oeuvre un procédé d'authentification.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée au moins une donnée représentative d'une identité d'un utilisateur (par exemple un login). Le microprocesseur de l'unité de traitement 52 met en oeuvre les étapes du procédé d'authentification, selon les instructions du programme d'ordinateur 53 pour transmettre cette identité à un serveur d'authentification ; recevoir, de la part de ce serveur d'authentification, un paramètre de connexion au terminal de communication de l'utilisateur (TCP#2), monter une connexion entre lui-même et le terminal de communication de l'utilisateur (TCP#2) à l'aide du paramètre préalablement reçu en transmettant une requête d'appairage au terminal et éventuellement une identité du serveur d'authentification et recevoir, de la part du serveur d'authentification, une assertion d'authentification lorsque l'authentification entre le terminal de communication (TCP#2) et le serveur d'authentification s'est correctement déroulée.

Pour cela, le terminal de communication d'un utilisateur comprend, outre la mémoire tampon 51, des moyens de communications, tels que des modules de communication réseau, des moyens de transmission de donnée et éventuellement un processeur de chiffrement.

Ces moyens peuvent se présenter sous la forme d'un processeur particulier implémenté au sein du dispositif, ledit processeur étant un processeur sécurisé. Selon un mode de réalisation particulier, ce terminal de communication d'un utilisateur met en oeuvre un module particulier qui est en charge de la réalisation des échanges (notamment des échanges nécessaires à la mise en oeuvre de la connexion virtuelle entre le terminal de communication TCP#2 et le serveur d'authentification ServA), ce module étant par exemple fourni par le fabricant du processeur en question afin de permettre l'utilisation dudit processeur. Pour ce faire, le processeur comprend des moyens d'identification uniques. Ces moyens d'identification uniques permettent d'assurer l'authenticité du processeur et/ou du terminal de communication passerelle à des fin de non usurpation.

Par ailleurs, le terminal de communication d'un utilisateur comprend en outre les moyens de stockage d'une donnée de référence de l'identité du serveur et des moyens de stockages de clés de chiffrement. Ces moyens se présentent également comme des interfaces de communications permettant d'échanger des données sur des réseaux de communication, des moyens d'interrogations et de mise à jour de base de données, ...

## Revendications

1. Procédé d'authentification d'un terminal de communication (TCP#2) appartenant à un utilisateur après d'un serveur d'authentification (ServA) connecté à un terminal passerelle (TCP#1) par l'intermédiaire d'un réseau de communication, procédé **caractérisé en ce qu'**il comprend, au sein du serveur d'authentification :
- une étape d'obtention, à partir dudit terminal passerelle (TCP#1), d'une donnée représentative d'une identité de l'utilisateur ;
- une étape de configuration, par ledit serveur d'authentification (ServA) d'une liaison de transmission de données entre ledit serveur d'authentification (ServA) et ledit terminal de communication utilisateur (TCP#2), par l'intermédiaire d'une interface de transmission de donnée prédéterminée dudit terminal passerelle (TCP#1) et en fonction de ladite donnée représentative d'une identité de l'utilisateur ;
- une étape de transmission, par le serveur d'authentification (ServA), au terminal de communication utilisateur (TCP#2), d'une donnée chiffrée de vérification d'authentification, par l'intermédiaire de la liaison de transmission de données ;
- une étape de réception, par le serveur d'authentification (ServA), en provenance du terminal de communication utilisateur (TCP#2), d'une donnée chiffrée de contre-vérification d'authentification ;
- une étape de délivrance d'une assertion d'authentification de l'utilisateur lorsque la donnée de contre-vérification d'authentification correspond à ladite donnée de vérification.

2. Procédé d'authentification selon la revendication 1, **caractérisé en ce que** l'interface de transmission de donnée prédéterminée dudit terminal passerelle (TCP#1) est une interface bluetooth et **en ce que** la liaison de transmission de données entre le serveur d'authentification (ServA) et le terminal de communication utilisateur (TCP#2) est une liaison bluetooth virtuelle.

3. Procédé selon la revendication 1, **caractérisé en ce que**, préalablement à l'étape d'obtention d'une donnée représentative d'une identité de l'utilisateur, ladite méthode comprend :
- une étape de réception, en provenance dudit terminal passerelle ou d'un serveur connecté audit serveur d'authentification, d'une requête de connexion ; et
- une étape de transmission, audit terminal passerelle (TCP#1), d'une requête d'identification en fonction de ladite requête de connexion.

4. Procédé selon la revendication 1, **caractérisé en ce que** étape de configuration, par ledit serveur d'authentification (ServA) d'une liaison de transmission de données entre ledit serveur d'authentification (ServA) et ledit terminal de communication utilisateur (TCP#2) comprend :
- une étape d'obtention, d'au moins une donnée représentative d'au moins un paramètre de connexion (PmC) au terminal de communication (TCP#2) à l'aide de ladite donnée représentative de ladite identité de l'utilisateur ;
- une étape de transmission de ladite au moins une donnée représentative d'un paramètre de connexion (PmC) audit terminal passerelle (TCP#1) ;

5. Procédé selon la revendication 4, **caractérisé en ce que** ledit au moins un paramètre de connexion (PmC) comprend au moins une donnée nécessaire à la construction du lien entre le terminal de communication de l'utilisateur (TCP#2) et le terminal passerelle (TCP#1).

6. Procédé selon la revendication 4, **caractérisé en ce que** ledit au moins un paramètre de connexion (PmC) comprend au moins une donnée appartenant au groupe comprenant :
- une adresse physique du terminal de communication de l'utilisateur (TCP#2) ;
- une donnée de type code d'appairage ;
- une donnée de type mot de passe.

7. Serveur d'authentification d'un terminal de communication (TCP#2) appartenant à un utilisateur après d'un serveur d'authentification (ServA) connecté à un terminal passerelle (TCP#1) par l'intermédiaire d'un réseau de communication, serveur **caractérisé en ce qu'**il comprend :
- un module configuré pour obtenir, à partir dudit terminal passerelle (TCP#1), d'une donnée représentative d'une identité de l'utilisateur ;
- un module configuré pour configurer d'une liaison de transmission de données entre ledit serveur d'authentification (ServA) et ledit terminal de communication utilisateur (TCP#2), par l'intermédiaire d'une interface de transmission de donnée prédéterminée dudit terminal passerelle (TCP#1) et en fonction de ladite donnée représentative d'une identité de l'utilisateur;
- un module configuré pour transmettre au terminal de communication utilisateur (TCP#2), d'une donnée chiffrée de vérification d'authentification, par l'intermédiaire de la liaison de transmission de données ;
- un module configuré pour recevoir en provenance du terminal de communication utilisateur (TCP#2), d'une donnée chiffrée de contre-vérification d'authentification ;
- un module configuré pour délivrer une assertion d'authentification de l'utilisateur lorsque la donnée de contre-vérification d'authentification correspond à ladite donnée de vérification.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'authentification selon la revendication 1, lorsqu'il est exécuté sur un ordinateur.

## Patentansprüche

1. Authentifizierungsverfahren eines Kommunikationsendgeräts (TCP#2), das einem Benutzer gehört, nach einem Authentifizierungsserver (ServA), der über ein Kommunikationsnetz mit einem Gateway-Endgerät (TCP#1) verbunden ist, Verfahren, das **dadurch gekennzeichnet ist, dass** es innerhalb des Authentifizierungsservers aufweist:
- einen Schritt des Erhaltens ausgehend von dem Gateway-Endgerät (TCP#1) eines Datums, das für eine Identität des Benutzers repräsentativ ist;
- einen Schritt des Konfigurierens durch den Authentifizierungsserver (ServA) einer Datenübertragungsverbindung zwischen dem Authentifizierungsserver (ServA) und dem Benutzerkommunikationsendgerät (TCP#2) über eine vorbestimmte Datenübertragungsschnittstelle des Gateway-Endgeräts (TCP#1) und in Abhängigkeit von dem Datum, das für eine Identität des Benutzers repräsentativ ist;
- einen Schritt des Übertragens durch den Authentifizierungsserver (ServA) an das Benutzerkommunikationsendgerät (TCP#2) eines verschlüsselten Verifizierungsdatums der Authentifizierung über die Datenübertragungsverbindung;
- einen Schritt des Empfangens durch den Authentifizierungsserver (ServA) von dem Benutzerkommunikationsendgerät (TCP#2) eines verschlüsselten Gegen-Verifizierungsdatums der Authentifizierung;
- einen Schritt des Ausstellens einer Authentifizierungsassertion des Benutzers, wenn das Gegen-Verifizierungsdatum dem Verifizierungsdatum entspricht.

2. Authentifizierungsverfahren nach Anspruch 1, **dadurch gekennzeichnet, dass** die vorbestimmte Datenübertragungsschnittstelle des Gateway-Endgeräts (TCP#1) eine Bluetooth-Schnittstelle ist und dass die Datenübertragungsverbindung zwischen dem Authentifizierungsserver (ServA) und dem Benutzerkommunikationsendgerät (TCP#2) eine virtuelle Bluetooth-Verbindung ist.

3. Verfahren nach Anspruch 1, **dadurch gekennzeichnet, dass** das Verfahren vor dem Schritt des Erhaltens eines Datums, das für eine Identität des Benutzers repräsentativ ist, aufweist;
- einen Schritt des Empfangens einer Anschlussanfrage von dem Gateway-Endgerät oder von einem Server, der an den Authentifizierungsserver angeschlossen ist; und
- einen Schritt des Übertragens an das Gateway-Endgerät (TCP#1) einer Identifizierungsanfrage in Abhängigkeit von der Anschlussanfrage.

4. Verfahren nach Anspruch 1, **dadurch gekennzeichnet, dass** der Schritt des Konfigurierens durch den Authentifizierungsserver (ServA) einer Datenübertragungsverbindung zwischen dem Authentifizierungsserver (ServA) und dem Benutzerkommunikationsendgerät (TCP#2) aufweist:
- einen Schritt des Erhaltens von mindestens einem Datum, das für mindestens einen Anschlussparameter (PmC) an das Gateway-Endgerät (TCP#2) repräsentativ ist, mit Hilfe des Datums, das für die Identität des Benutzers repräsentativ ist;
- einen Schritt des Übertragens des mindestens einen Datums, das für einen Anschlussparameter (PmC) repräsentativ ist, an das Gateway-Endgerät (TCP#1) .

5. Verfahren nach Anspruch 4, **dadurch gekennzeichnet, dass** der mindestens eine Anschlussparameter (PmC) mindestens ein Datum aufweist, das zum Aufbauen der Verbindung zwischen dem Benutzerkommunikationsendgerät (TCP#2) und dem Gateway-Endgerät (TCP#1) notwendig ist.

6. Verfahren nach Anspruch 4, **dadurch gekennzeichnet, dass** der mindestens eine Anschlussparameter (PmC) mindestens ein Datum aufweist, das zu der Gruppe gehört, umfassend:
- eine physikalische Adresse des Benutzerkommunikationsendgeräts (TCP#2);
- ein Datum des Typs des Pairing-Codes;
- ein Datum des Typs des Passworts.

7. Authentifizierungsserver eines Kommunikationsendgeräts (TCP#2), das einem Benutzer gehört, nach einem Authentifizierungsserver (ServA), der über ein Kommunikationsnetz mit einem Gateway-Endgerät (TCP#1) verbunden ist, Server, der **dadurch gekennzeichnet ist, dass** er aufweist:
- ein Modul, das konfiguriert ist, um ausgehend von dem Gateway-Endgerät (TCP#1) ein Datum zu empfangen, das für eine Identität des Benutzers repräsentativ ist;
- ein Modul, das konfiguriert ist, um eine Datenübertragungsverbindung zwischen dem Authentifizierungsserver (ServA) und dem Benutzerkommunikationsendgerät (TCP#2) über eine vorbestimmte Datenübertragungsschnittstelle des Gateway-Endgeräts (TCP#1) und in Abhängigkeit von dem Datum, das für eine Identität des Benutzers repräsentativ ist, zu konfigurieren;
- ein Modul, das konfiguriert ist, um ein verschlüsseltes Verifizierungsdatum der Authentifizierung über die Datenübertragungsverbindung an das Benutzerkommunikationsendgerät (TCP#2) zu übertragen;
- ein Modul, das konfiguriert ist, um ein verschlüsseltes Gegen-Verifizierungsdatum der Authentifizierung von dem Benutzerkommunikationsendgerät (TCP#2) zu empfangen;
- ein Modul, das konfiguriert ist, um eine Authentifizierungsassertion des Benutzers auszustellen, wenn das Gegen-Verifizierungsdatum dem Verifizierungsdatum entspricht.

8. Computerprogrammprodukt, das von einem Kommunikationsnetz heruntergeladen werden kann und/oder auf einem computerlesbaren Medium gespeichert ist und/oder von einem Mikroprozessor ausgeführt werden kann, **dadurch gekennzeichnet, dass** es Programmcodebefehle für die Ausführung eines Authentifizierungsverfahrens nach Anspruch 1 aufweist, wenn es auf einem Computer ausgeführt wird.

## Claims

1. Method for authenticating a communications terminal (TCP#2) belonging to a user with an authentication server (ServA) connected to a gateway terminal (TCP#1) by means of a communications network, method **characterized in that** it comprises, within the authentication server:
- a step for obtaining a piece of data representing an identity of the user from said gateway terminal (TCP#1);
- a step of configuration, by said authentication server (ServA), of a data transmission link between said authentication server (ServA) and said user's communications terminal (TCP#2), by means of a predefined data transmission interface of said gateway terminal (TCP#1) and as a function of said piece of data representing an identity of the user;
- a step of transmission, by the authentication server (ServA), to the user's communications terminal (TCP#2), of a piece of encrypted data for checking authentication, by means of the data transmission link;
- a step of reception, by the authentication user (ServA), coming from the user's communications terminal (TCP#2), of a piece of encrypted data for the counter-checking of authentication;
- a step of issuing an assertion of authentication of the user when the piece of data for the counter-checking of authentication corresponds to said piece of data for checking authentication.

2. Method for authenticating according to claim 1, **characterized in that** the predefined data transmission interface of said gateway terminal (TCP#1) is a Bluetooth interface and **in that** the data transmission link between the authentication server (ServA) and the user's communications terminal (TCP#2) is a virtual Bluetooth link.

3. Method according to claim 1, **characterized in that**, prior to the step for obtaining a piece of data representing an identity of the user, said method comprises:
- a step for receiving a request for connection from said gateway terminal or from a server connected to said authentication server; and
- a step of transmission, to said gateway terminal (TCP#1), of a request for identification as a function of said request for connection.

4. Method according to claim 1, **characterized in that** the step of configuration by said authentication server (ServA) of a data transmission link between said authentication server (ServA) and said user's communications terminal (TCP#2) comprises:
- a step for obtaining at least one piece of data representing at least one parameter of connection (PmC) to the communications terminal (TCP#2) by means of said piece of data representing said identity of the user;
- a step of transmission of said at least one piece of data representing a parameter of connection (PmC) to said gateway terminal (TCP#1) ;

5. Method according to claim 4, **characterized in that** said at least one parameter of connection (PmC) comprises at least one piece of data necessary for the building of the link between the communications terminal of the user (TCP#2) and the gateway terminal (TCP#1).

6. Method according to claim 4, **characterized in that** said at least one parameter of connection (PmC) comprises at least one piece of data belonging to the group comprising:
- a physical address of the user's communication terminal (TCP#2) ;
- a piece of data of the pairing code type;
- a piece of data of the password type.

7. Server for authenticating a communications terminal (TCP#2) belonging to a user with an authentication server (ServA) connected to a gateway terminal (TCP#1) by means of a communications network, server **characterized in that** it comprises:
- a module configured to obtain a piece of data, from said gateway terminal (TCP#1), representing an identity of the user;
- a module configured to configure a data transmission link between said authentication server (ServA) and said user's communications terminal (TCP#2), by means of a predefined data transmission interface of said gateway terminal (TCP#1) and as a function of said piece of data representing an identity of the user;
- a module configured to transmit, to the user' communications terminal (TCP#2), a piece of encrypted data for checking authentication by means of the data transmission link;
- a module configured to receive a piece of encrypted data for the counter-checking of authentication from the user's communications terminal (TCP#2);
- a module configured to issue an assertion of authentication of the user when the piece of data for the counter-checking of authentication corresponds to said piece of data for checking authentication.

8. Computer program downloadable from a communications network and/or stored in a computer readable medium and/or executable by a microprocessor, **characterized in that** it comprises program code instructions to execute a method for authenticating according to claim 1 when the program is executed by a computer.
